# EUROPEAN PATENT APPLICATION

(11) **EP 1 471 278 A2**
(43) Date of publication of application: **27.10.2004**
(21) Application number: 04017728.9
(22) Date of filing: 04.10.1999
(51) Int. Cl.: F16D 25/12

(54) **Vehicular friction clutch apparatus**

(30) Priority: 05.10.1998 JP 28291198; 16.11.1998 JP 32463198; 31.08.1999 JP 24436199
(62) Divisional of application: 99119627.0
(71) Applicant: AISIN SEIKI KABUSHIKI KAISHA, Kariya City Aichi Pref. (JP)
(72) Inventor: Nakane, Mototaka, Toyota-shi Aichi-ken (JP); Watanabe, Kazuyuki, Chiryu-shi Aichi-ken (JP); Mori, Masanori, Chiryu-shi Aichi-ken (JP)
(74) Representative: Leson, Thomas Johannes Alois, Dipl.-Ing.

(57) **Abstract**

The present invention relates to a vehicular friction clutch apparatus for carrying out torque transmission between an engine and a transmission by pinching a facing of a clutch disk (12) integrally rotated with an input shaft of the transmission of a vehicle by a flywheel (11) integrally rotated with an output shaft of the engine of the vehicle and a pressure plate (13b) integrally rotated with the flywheel and capable of progressing and regressing to and from the flywheel, wherein a force for pinching the facing is produced by pressing the pressure plate to the flywheel by a hydraulic cylinder device (18) supported by a member fixed to the vehicle via a lever mechanism integrally rotated with the pressure plate; wherein the hydraulic pressure is supplied to the hydraulic cylinder device (18) by a master cylinder (140) in accordance with an operational stroke of a clutch pedal whereby hydraulic pressure is outputted to the hydraulic cylinder device (18) to thereby control the force of pinching the facing; and wherein under a state in which an operating force is not exerted on the clutch pedal, the hydraulic cylinder device produces a maximum pinching force of the facing, when the operational force is exerted on the clutch pedal, the input side piston is slidably moved in a direction of increasing a volume of the pressure chamber.

## Description

### BACKGROUND OF THE INVENTION

### FIELD OF THE INVENTION

The present invention relates to a vehicular friction clutch for carrying out torque transmission between an engine and a transmission by pinching a facing of a clutch disk integrally rotated with an input shaft of the transmission of a vehicle by a flywheel integrally rotated with an output shaft of the engine of the vehicle and a pressure plate integrally rotated with the flywheel and capable of progressing and regressing to and from the flywheel.

### DESCRIPTION OF THE RELATED ART

According to a vehicular friction clutch apparatus of this kind, generally, force of pinching a facing is produced by a spring urging a pressure plate toward a flywheel, the pinching force of the facing is made controllable by installing a release lever producing force opposed to the force of the spring and transmission torque in proportion to the pinching force of the facing is made controllable. An apparatus using a diaphragm spring as the spring is referred to as a diaphragm spring type friction clutch apparatus and an apparatus using a coil spring as the spring is referred to as a coil spring type friction clutch apparatus. A diaphragm spring type friction clutch apparatus is widely used in a small-sized vehicle and a medium-sized vehicle and the diaphragm spring and the release lever are integrally formed. Further, in either of the diaphragm spring type friction clutch apparatus and the coil spring type friction clutch apparatus, a pressure plate, a spring and a release lever are integrated to a cover plate to thereby constitute a clutch cover assembly and the cover plate of the clutch cover assembly and a flywheel are coupled.

Further, in order to control transmission torque, a release bearing for exerting force to a point of force of the release lever is slidably supported by a case of a transmission. The release bearing and a piston of a hydraulically operated release cylinder device fixed to the case of the transmission are mechanically connected via a release fork pivotably supported by the case of the transmission or a piston of a hydraulically operated release cylinder device fixed to the case of the transmission coaxially with the release bearing and the release bearing are mechanically connected. Force opposed to force of a spring is produced by supplying hydraulic pressure to the release cylinder device to thereby enable to control the pinching force of the facing, that is, the transmission torque.

When the transmission torque of the vehicular friction clutch device is controlled by a driver, the hydraulic pressure supplied to the release cylinder device is controlled by supplying the hydraulic pressure to the release cylinder device by a master cylinder device mechanically connected to a clutch pedal of a vehicle. Further, when the transmission torque of the vehicular friction clutch apparatus is automatically controlled in starting or changing speed, the hydraulic pressure supplied to the release cylinder device is controlled by reducing hydraulic pressure from a hydraulic pressure source to desired hydraulic pressure by a pressure control valve and supplying the hydraulic pressure to the release cylinder device or charging and discharging pressurized oil from a hydraulic pressure source to and from the release cylinder device by a charging and discharging control valve to constitute desired hydraulic pressure by detecting the hydraulic pressure of the release cylinder device.

In order to prevent an amount of pressurized oil to be charged and discharged to and from the release cylinder device for making variable the transmission torque of the vehicular friction clutch from being influenced by wear of the facing, the release cylinder device is addingly installed with a position adjusting device for moving a return position of a piston when hydraulic pressure in a pressure chamber of the release cylinder device is discharged, in a direction of reducing a volume of the pressure chamber by following wear of the facing.

Further, in Japanese Utility Model Publication No. 90736/1992, there is described a vehicular friction clutch apparatus constituted to produce pinching force of a facing by a hydraulic cylinder device rotated integrally with a flywheel.

According to the conventional diaphragm spring type friction clutch apparatus or the conventional coil spring type friction clutch apparatus, the release cylinder device is supported by the case of the transmission and accordingly, a structure of hydraulically connecting the release cylinder device and its hydraulic control device is simplified and the apparatus is excellent in view of mountability to an ordinary vehicle. In contrast thereto, according to the friction clutch apparatus described in Japanese Utility Model Laid-Open No. 90736/1992, the hydraulic cylinder device is integrally rotated with the flywheel and accordingly, the structure of hydraulically connecting the hydraulic cylinder device and its hydraulic control device is complicated, further, hydraulic pressure of the hydraulic cylinder device undergoes influence of centrifugal force, hence, a device for canceling the influence of the centrifugal force is needed and accordingly, the apparatus is inferior in view of mountability to an ordinary vehicle.

An abrupt variation in torque in a drive system of a vehicle brings about shock of the vehicle and therefore, when transmission torque of a vehicular friction clutch apparatus is automatically controlled, it is preferable that a correlation between pinching force of a facing and hydraulic pressure of a release cylinder device can be provided simply and stably.

However, according to the conventional diaphragm spring type friction clutch apparatus or the coil spring type friction clutch apparatus, the above-described correlation cannot be provided simply. That is, by running a vehicle, a facing of a clutch disk is worn and finally worn out. In accordance with progress in wear of the facing, a position of a pressure plate pinching the facing is shifted to a side of a flywheel, an amount of flexing a spring is reduced and force of the spring is changed. Therefore, according to a value of hydraulic pressure which must be supplied to the release cylinder device in order to adjust the pinching force of the facing to an arbitrary value, a variation in a position of the pressure plate owing to wear of the facing needs to detect and the value must be corrected by an amount of a variation in the force of the spring owing to the variation in the position of the pressure plate. Particularly, a relationship between a flexing amount and force of a diaphragm spring in the case of a diaphragm spring type friction clutch apparatus is nonlinear and therefore, it is important to detect with high accuracy a deviation in a position of a pressure plate owing to wear of the facing.

Further, according to a vehicular friction clutch apparatus, it is preferable that a stroke efficiency represented by (an operational stroke amount of a hydraulic cylinder device - a stroke amount of a pressure plate x a lever ratio) / the operational stroke amount of the hydraulic cylinder device, is excellent. However, according to the conventional diaphragm spring type friction clutch apparatus or the conventional coil spring type friction clutch apparatus, a stroke amount of a piston of the release cylinder device is dissipated by flexing a release lever or a cover plate. Particularly, a direction of force exerted on a fulcrum portion of the release lever is inverted between a state of transmitting torque and a state of interrupting torque transmission and therefore, an amount of flexing the cover plate is considerable and accordingly, an ineffective stroke amount is considerable, hence, the stroke efficiency is deteriorated. Particularly, in view of the fact that the diaphragm spring and the release lever are integrated in the diaphragm spring type friction clutch apparatus, bending rigidity of the release lever is obliged to be low and the amount of flexing the release lever is considerable.

The poor stroke efficiency brings about large size formation of a hydraulic system including the release cylinder device and results in much disadvantage.

### SUMMARY OF THE INVENTION

It is principal object of the invention to provide a vehicular friction clutch apparatus excellent in view of mountability to an ordinary vehicle, capable of simply and stably providing a correlation between pinching force of a facing and hydraulic pressure of a hydraulic cylinder device and excellent in the stroke efficiency.

In addition to the above-described object, it is other object of the invention to provide a vehicular friction clutch apparatus in which an amount of pressurized oil to be charged and discharged to and from a hydraulic cylinder device in order to make variable transmission torque is not influenced by wear of a facing.

According to a first aspect of the invention, there is provided a vehicular friction clutch apparatus for carrying out torque transmission between an engine and a transmission by pinching a facing of a clutch disk integrally rotated with an input shaft of the transmission of a vehicle by a flywheel integrally rotated with an output shaft of the engine of the vehicle and a pressure plate integrally rotated with the flywheel and capable of progressing and regressing to and from the flywheel wherein a force for pinching the facing is produced by pressing the pressure plate to the flywheel by a press force producing mechanism via a lever mechanism integrally rotated with the pressure plate.

According to a second aspect of the invention, there is provided the vehicular friction clutch apparatus according to the first aspect wherein the press force producing mechanism is a hydraulic cylinder device supported by a member fixed to the vehicle.

According to a third aspect of the invention, there is provided the vehicular friction clutch apparatus according to the second aspect, further comprising a position adjusting device for moving a return position of a movable member of a hydraulic operational chamber formed by a fixed member and the movable member of the hydraulic cylinder device when a pressurized oil in the hydraulic operational chamber is discharged, in a direction of enlarging a volume of the hydraulic operational chamber by following wear of the facing.

According to a fourth aspect of the invention, there is provided the vehicular friction clutch apparatus according to third aspect wherein the hydraulic cylinder device is arranged to separate from the flywheel, a bearing assembly in a ring-like shape engaged with the lever mechanism is supported by the member fixed to the vehicle coaxially with the flywheel and such that the bearing assembly is capable of progressing and regressing to and from the lever mechanism, one end portion of a fork member a portion between both ends thereof of which is pivotably supported by the member fixed to the vehicle is operationally connected to the bearing assembly, the hydraulic cylinder device is provided with a rod member coaxially and pivotably engaged with the movable member and pivotably engaged with other end portion of the fork member and the position adjusting device is operated between the rod member and the fixed member.

According to a fifth aspect of the invention, there is provided the vehicular friction clutch apparatus according to the fourth aspect, further comprising an adjusting member engaged with either one member of the rod member and the fixed member movably in one direction in an axial direction of the hydraulic cylinder device by being applied with a force in the axial direction equal to or larger than a predetermined value and unmovably in other direction and engaged with other member reciprocally in the axial direction by a predetermined stroke amount.

According to a sixth aspect of the invention, there is provided the vehicular friction clutch apparatus according to the fifth aspect, further comprising an urging member for restricting blind movement of the movable member when the hydraulic pressure in the hydraulic operational chamber is discharged by urging the movable member of the hydraulic cylinder device in the direction of enlarging the volume of the hydraulic operational chamber.

According to a seventh aspect of the invention, there is provided the vehicular friction clutch apparatus according to the sixth aspect wherein the adjusting member is arranged in a ring-like space defined between an outer peripheral face of the rod member and an inner peripheral face of the fixed member, a plurality of tongue portions engaged with the peripheral face are provided at one peripheral edge proximate to one peripheral face in the peripheral faces opposed to each other of the rod member and the fixed member defining the ring-like space movably in the one direction and unmovably in the other direction relative to the peripheral face and the adjusting member is constituted to other peripheral face of the peripheral faces opposed to each other by a spring plate in a ring-like shape capable of being brought into contact with a pair of stopper portions provided at the other peripheral face such that the reciprocal movement equal to or larger than the predetermined stroke is hampered at other peripheral portion.

According to an eighth aspect of the invention, there is provided the vehicular friction clutch apparatus according to the third aspect wherein the fixed member and the movable member of the hydraulic cylinder device are formed in a ring-like shape, the hydraulic cylinder device is coaxially arranged with the flywheel, the bearing assembly engaged with the lever mechanism is supported integrally and movably in the axial direction by the movable member of the hydraulic pressure cylinder device and the position adjusting device is operated between the movable member and the fixed member.

According to a ninth aspect of the invention, there is provided the vehicular friction clutch apparatus according to the eighth aspect, further comprising an adjusting member engaged with either one member of the movable member and the fixed member movably in one direction of the axial direction of the hydraulic cylinder device by being applied with a force in the axial direction equal to or larger than a predetermined value and unmovably in other direction and engaged with other member reciprocally in the axial direction by a predetermined stroke.

According to a tenth aspect of the invention, there is provided the vehicular friction clutch apparatus according to the ninth aspect, further comprising an urging member for restricting blind movement of the movable member when the hydraulic pressure in the hydraulic operational chamber is discharged by urging the movable member of the hydraulic cylinder device in the direction of enlarging the volume of the hydraulic operational chamber.

According to an eleventh aspect of the invention, there is provided the vehicular friction clutch apparatus according to the tenth aspect wherein the adjusting member is arranged in a ring-like space defined between an outer peripheral face of the movable member and an inner peripheral face of the fixed member, a plurality of tongue portions engaged with the peripheral face are provided at one peripheral edge proximate to one peripheral face in the peripheral faces opposed to each other of the movable member and the fixed member defining the ring-like space movably in the one direction and unmovably in the other direction relative to the peripheral face and the adjusting member is constituted to other peripheral face of the peripheral faces opposed to each other by a spring plate in a ring-like shape capable of being brought into contact with a pair of stopper portions provided at the other peripheral face such that the reciprocal movement equal to or larger than the predetermined stroke is hampered at other peripheral edge portion.

According to a twelfth aspect of the invention, there is provided the vehicular friction clutch apparatus according to the second aspect wherein the hydraulic pressure is supplied to the hydraulic cylinder device by a master cylinder capable of carrying out the torque transmission substantially in proportion to hydraulic pressure at an inner portion.

According to a thirteenth aspect of the invention, there is provided the vehicular friction clutch device according to the twelfth aspect wherein the master cylinder comprises a cylinder body, an input side piston slidably arranged at inside of the cylinder body, a pressure chamber formed by the input side piston and the cylinder body, a reservoir storing oil at inside thereof capable of switching communication and interruption to and from the pressure chamber in accordance with the position of the input side piston relative to the cylinder body, and an output port for communicating inside of the pressurized chamber with inside of the hydraulic cylinder device, wherein the input side piston is slidably moved at inside of the cylinder body in accordance with an operational stroke of a clutch pedal and hydraulic pressure at inside of the pressurized chamber is outputted to the hydraulic cylinder device to thereby control the force of pinching the facing.

According to a fourteenth aspect of the invention, there is provided the vehicular friction clutch apparatus according to the thirteenth aspect wherein under a state in which an operating force is not exerted on the clutch pedal, the hydraulic cylinder device produces a maximum pinching force of the facing.

According to a fifteenth aspect of the invention, there is provided the vehicular friction clutch apparatus according to the fourteenth aspect wherein when the operational force is exerted on the clutch pedal, the input side piston is slidably moved in a direction of increasing a volume of the hydraulic operational chamber of the hydraulic cylinder device.

According to a sixteenth aspect of the invention, there is provided the vehicular friction clutch apparatus according to the fifteenth aspect, further comprising an urging mechanism for urging the input side piston in a direction in which the hydraulic cylinder device produces the pinching force of the facing by hydraulic pressure converted via the master cylinder in the state in which the operational force is not exerted on the clutch pedal.

According to a seventeenth aspect of the invention, there is provided the vehicular friction clutch apparatus according to the sixteenth aspect wherein the urging mechanism is provided with a region in which a force of urging the input side piston is reduced when a stroke amount of the clutch pedal is increased.

According to an eighteenth aspect of the invention, there is provided the vehicular friction clutch apparatus according to the sixteenth aspect wherein the urging mechanism is operationally arranged between the master cylinder and the clutch pedal.

According to a nineteenth aspect of the invention, there is provided the vehicular friction clutch apparatus according to the eighteenth aspect wherein the urging mechanism is a diaphragm spring.

According to a twentieth aspect of the invention, there is provided the vehicular friction clutch apparatus according to the nineteenth aspect wherein the urging mechanism is a diaphragm spring brought into contact with a rod an outer periphery of which is supported relative to the cylinder body and an inner periphery of which is connected to the input side piston.

According to a twenty-first aspect of the invention, there is provided the vehicular friction clutch apparatus according to the eighteenth aspect wherein the urging mechanism comprises a tapered member formed at the rod connected to the input side piston and provided with inclined faces thinned from the master cylinder toward the clutch pedal, rollers arranged to face the inclined faces of the tapered member and a force accumulating member for providing a load along the inclined faces of the tapered member toward the rollers.

According to a twenty-second aspect of the invention, there is provided the vehicular friction clutch apparatus according to the eighteenth aspect wherein the urging mechanism comprises a force accumulating member formed at a rod connected to the input side piston for applying the rod with a load exerted from the clutch pedal toward the master cylinder.

According to a twenty-third aspect of the invention, there is provided the vehicular friction clutch apparatus according to the sixteenth aspect wherein the urging mechanism is arranged at a position separated from the master cylinder and operated by the clutch pedal.

According to a twenty-fourth aspect of the invention, there is provided the vehicular friction clutch apparatus according to the twenty-third aspect wherein the urging mechanism is a diaphragm spring.

According to a twenty-fifth aspect of the invention, there is provided the vehicular friction clutch apparatus according to the twenty-fourth aspect wherein the urging mechanism is a diaphragm spring an outer periphery of which is supported relative to a bracket of the vehicle and an inner periphery of which is brought into contact with a shaft connected to the clutch pedal.

According to a twenty-sixth aspect of the invention, there is provided the vehicular friction clutch apparatus according to the twenty-third aspect wherein the urging mechanism comprises a tapered member formed at the shaft connected to the clutch pedal and provided with inclined faces thinned from the clutch pedal to the master cylinder or from the master cylinder to the clutch pedal, rollers arranged to face the inclined faces of the tapered member and a force accumulating member for applying load along the inclined faces of the tapered member toward the rollers.

According to a twenty-seventh aspect of the invention, there is provided the vehicular friction clutch apparatus according to the twenty-third aspect wherein the urging mechanism further comprises a force accumulating member formed at a rod connected to the input side piston for applying the rod with a load exerted from the clutch pedal to the master cylinder or a load exerted from the master cylinder toward the clutch pedal.

According to a twenty-eighth aspect of the invention, there is provided the vehicular friction clutch apparatus according to the third aspect, wherein the hydraulic cylinder device further comprises a seal member brought into abrasive contact with the fixed member between the fixed member and the movable member and at least either of abrasive portions of the seal member and the fixed member is coated by fluorine resin.

According to a twenty-ninth aspect of the invention, there is provided the vehicular friction clutch apparatus according to the thirteenth aspect wherein the master cylinder further comprises a seal member brought into abrasive contact with the cylinder body between the cylinder body and the input side piston, wherein at least either of abrasive portions of the seal member and the cylinder body is coated with fluorine resin.

In the vehicular friction clutch apparatus according to the first aspect of the invention, the pinching force of the facing of the clutch disk is produced by the press force producing mechanism and accordingly, the apparatus is excellent in view of mountability to an ordinary vehicle. Further, a direction of force exerted to a fulcrum point of the lever mechanism is not inverted between a state of transmitting torque and a state of interrupting the torque transmission and accordingly, an amount of ineffective stroke caused by flexing a cover plate in switching the direction between the torque transmitting state and the interrupting state of the torque transmission is reduced and therefore, the stroke efficiency is promoted and an operating system including the press force producing mechanism can be downsized.

In the vehicular friction clutch apparatus according to the second aspect of the invention, a value of hydraulic pressure to be supplied to the hydraulic cylinder device for adjusting the pinching force of the facing to an arbitrary value, is made substantially constant regardless of a wear amount of the facing and a correlation between the pinching force of the facing and the hydraulic pressure of the release cylinder device can be provided simply and stably. Further, a hydraulic system including the hydraulic cylinder device can be downsized.

In the vehicular friction clutch apparatus according to the third aspect of the invention, there is provided the position adjusting device for moving the return position of the movable member when the hydraulic pressure of the hydraulic operational chamber formed by the fixed member and the movable member of the hydraulic cylinder device is discharged, in the direction of enlarging the volume of the hydraulic operational chamber by following the wear of the facing and accordingly, the amount of the pressurized oil to be charged and discharged to and from the hydraulic cylinder device to make variable the transmission torque is not influenced by the wear of the facing and stays always constant.

The vehicular friction clutch apparatus according to the fourth aspect through the seventh aspect of the invention is provided with a general constitution in which the hydraulic cylinder device is arranged to be separate from the flywheel, the position adjusting device is also incorporated in the hydraulic cylinder device, a number of constituent parts is small and therefore, the mountability to an ordinary vehicle is excellent and the apparatus can be fabricated inexpensively.

The vehicular friction clutch apparatus according to the eighth aspect through the eleventh aspect of the invention is provided with a general constitution in which an axis line of the hydraulic cylinder device is arranged substantially coaxially with an axis line of the flywheel, the position adjusting device is also incorporated in the hydraulic cylinder device, a number of constituent parts is small and accordingly, the apparatus is excellent in the mountability to an ordinary vehicle and can be fabricated inexpensively.

The vehicular friction clutch apparatus according to the twelfth aspect through the twenty-seventh aspect of the invention is provided with a specific constitution in which when the clutch pedal is not operated, stable engaging load of the clutch is supplied and the hydraulic pressure is supplied to the hydraulic cylinder device when the transmission torque of the vehicular friction clutch apparatus is controlled by operating the clutch pedal and the pressure chamber and the reservoir are communicated with each other when the clutch is released by moving the input side piston slidably at inside of the cylinder body. Therefore, even when an inclination of the lever mechanism for pressing the pressure plate is displaced by wearing of the facing, an amount of oil in accordance with the wear amount of the facing is supplied from the reservoir to inside of the pressure chamber and therefore, the stroke of sliding movement of the input side piston stays substantially constant. Thereby, the correlation between the stroke and the load of the clutch pedal stays substantially constant and stable characteristic can be provided.

In the vehicular friction clutch apparatus according to the twenty-eighth aspect and the twenty-ninth aspect of the invention, the sliding contact portion is constituted by the seal member coated with fluorine resin and accordingly, even when the hydraulic operational chamber and the pressure chamber are exposed under high pressure, the seal member can be prevented from being stuck to the fixed member or the inner peripheral face of the cylinder body as less as possible and stable characteristic can be provided.

### BRIEF DESCRIPTION OF THE DRAWINGS

Fig. 1 is a view showing a vehicular friction clutch apparatus according to the invention;
Fig. 2 is a view showing a clutch cover assembly in Fig. 1;
Fig. 3 is a view showing an attaching relationship of a strap of the clutch cover assembly of Fig. 2;
Fig. 4 is a view showing an attaching relationship of a connecting member of the clutch cover assembly of Fig. 2;
Fig. 5 is a view enlarging a hydraulic cylinder device in Fig. 1;
Fig. 6 is a view viewing a belleville spring in Fig. 5 from right direction of Fig. 5;
Fig. 7 is a view showing a vehicular friction clutch apparatus different from that in Fig. 1 according to the invention;
Fig. 8 is a view enlarging a hydraulic cylinder device in Fig. 7;
Fig. 9 is a view showing a constitution related to an operating system of the hydraulic cylinder device of the vehicular friction clutch apparatus according to the invention;
Fig. 10 is a view showing a constitution related to an operating system of a hydraulic cylinder device different from that in Fig. 9 according to the invention;
Fig. 11 is a view showing a constitution related to an operating system of the hydraulic cylinder device of the vehicular friction clutch apparatus according to the invention; and
Fig. 12 is a view showing a constitution related to an operating system of the hydraulic cylinder device of the vehicular friction clutch apparatus according to the invention.

### DETAILED DESCRIPTION OF THE PREFERRED EMBODIMENTS

An explanation will be given of embodiments of a vehicular friction clutch apparatus according to the invention in reference to the drawings as follows.

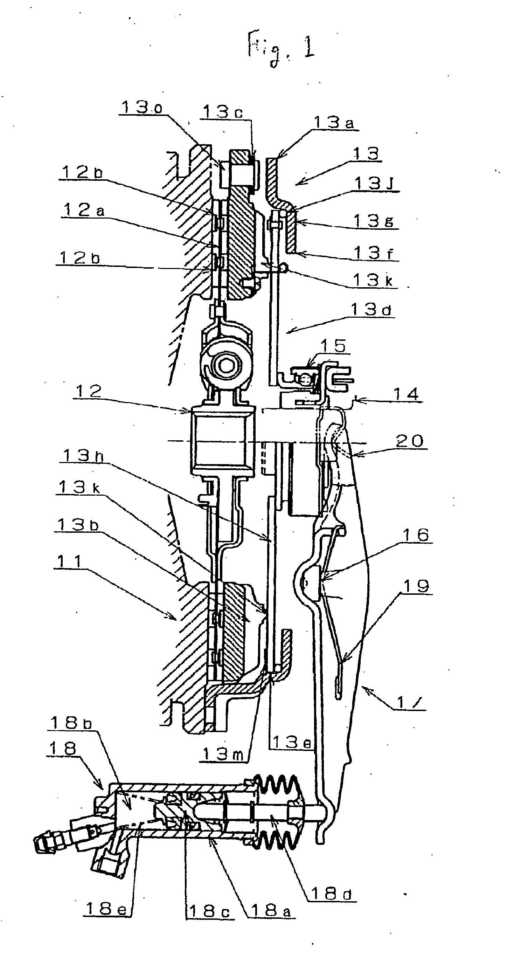

Fig. 1 shows a vertical sectional view when transmission torque of a vehicular friction clutch apparatus according to the invention is maximized. In Fig. 1, numeral 11 designates a flywheel integrally rotated with an output shaft of an engine, not illustrated, numeral 12 designates a clutch disk connected in spline connection with an input shaft of a transmission, not illustrated (its case is fixed to the vehicle), numeral 13 designates a clutch cover assembly, numeral 14 designates a support sleeve (a member fixed to the vehicle) fixed to the transmission case to surround an outer periphery of the input shaft of the transmission, numeral 15 designates a bearing assembly slidably supported by the support sleeve 14, numeral 16 designates a pivot supporting member (a member fixed to the vehicle) fixed to a clutch housing (not illustrated) fixed to the transmission case or the vehicle, numeral 17 designates a fork member which is stretched in a radius direction and a middle portion of which is pivotably supported by the pivot supporting member 16 and numeral 18 designates a hydraulic cylinder device for pushing an outer end of fork member 17.

The clutch cover assembly 13 and the bearing assembly 15 are arranged substantially coaxially with the flywheel 11 and an axis line of the hydraulic cylinder device 18 is arranged substantially in parallel with an axis line of the flywheel 11.

The clutch disk 12 is provided with facings 12b on both sides of a cushioning spring 12a made of a thin leaf spring installed at its outer peripheral portion.

As shown by Fig. 1 through Fig. 4, the clutch cover assembly 13 is constituted as main constituent elements by a cover plate 13a coupled to the flywheel 11 by bolts at its outer peripheral portion, a pressure plate 13b, a strap (constituted by laminating a plurality of sheets of thin leaf springs) 13c for connecting the cover plate 13a with the pressure plate 13b to rotate integrally with each other and urging the pressure plate 13b in the axial direction to separate from the flywheel 11 and a lever mechanism 13d disposed between opposed portions of the cover plate 13a and the pressure plate 13b in the axial direction.

The cover plate 13a is provided with a cylindrical portion 13e, a flange portion 13f and a corner portion 13g at a boundary therebetween. The lever mechanism 13d is constituted as main constituent elements by 12 pieces of lever members 13h each made by a plate material radially arranged on an inner peripheral side of the cylindrical portion 13e of the cover plate 13a along with an inner periphery of the cylindrical portion 13e, a fulcrum member 13j in a ring-like shape made of a wire material and arranged on an inner peripheral side of the corner portion 13g of the cover plate 13a, 12 pieces of operational point portions 13k in a projected shape formed at the pressure plate 13b and a connection member 13m in a ring-like shape made of a thin leaf spring material for connecting outer end portions in the radius direction of 12 pieces of the lever members 13h to each other. Inner end portions of the respective lever members 13h constitute force point portions pushed to the side of the flywheel 11 by the bearing assembly 15.

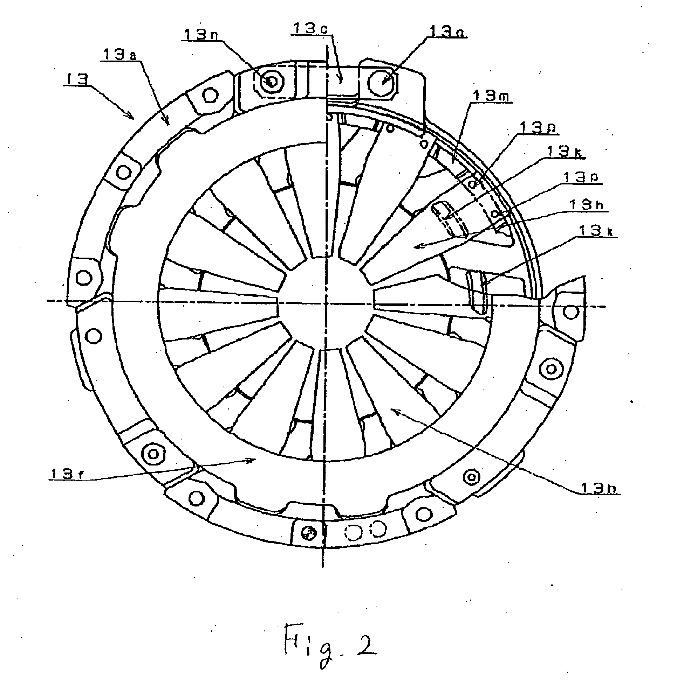

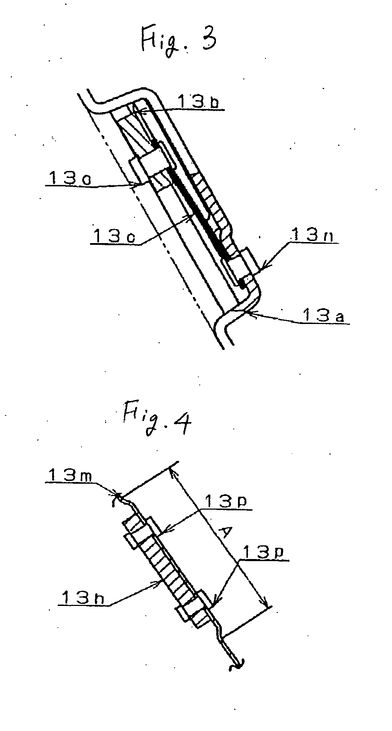

As shown by Fig. 1 and Fig. 3, one end of the strap 13c is coupled to the cover plate 13a by rivets 13n and other end thereof is coupled to a projected portion of an outer periphery of the pressure plate 13b by rivets 13o. 3 pieces of the straps 13c are installed at equal intervals in the peripheral direction. The connection member 13m is formed by an elastic thin plate and coupled to the respective lever members 13h by rivets 13p as shown in Fig. 2 and Fig. 4. In order to avoid stress concentration of the connection member 13m and to bring an outer end in the radius direction of the lever member 13h into contact with the inner periphery of the cylindrical portion 13e of the cover plate 13a by enlarging a peripheral direction length of the connection member 13m by centrifugal force operated on the lever member 13h, a waviness is provided such that portions of the connection member 13m opposed to the lever members 13h and the portions thereof not opposed thereto are shifted from each other in the axial direction.

An inner side face of the corner portion 13g of the cover plate 13a with which the fulcrum member 13j is brought into contact is machined. Further, the fulcrum member 13j and the respective lever members 13h are quenched to promote wear resistance.

An inner end of the fork member 17 is connected to the bearing assembly 15 such that the bearing assembly 15 is slid in the axial direction by pivotal movement of the fork member 17 centering on a support member by the pivot supporting member 16. Contact between the fork member 17 and the bearing assembly 15 is maintained by a spring 20 and contact thereof with the lever member 13h is maintained by a spring 19.

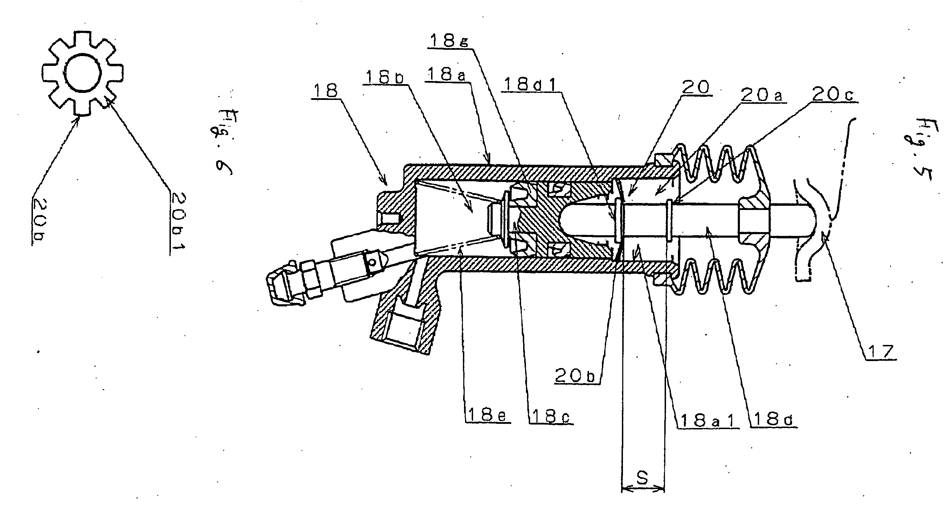

As shown by Fig. 1 and Fig. 5, the hydraulic cylinder device 18 is constituted as main constituent elements by a cylinder (fixed member) 18a fixed to the transmission case, a piston (movable member) 18c slidably fitted to inside of the cylinder 18a for partitioning a hydraulic operational chamber 18b, a seal member 18g arranged between the cylinder 18a and the piston 18c, a push rod (rod member) 18d for carrying out transmission of force between the piston 18c and an outer end of the fork member 17, a spring 18e installed at inside of the hydraulic operational chamber 18b for maintaining a state of contact between the push rod 18d, the piston 18c and the fork member 17 by urging the piston 18c to the outer end of the fork member 17 and a hydraulic port 18f for supplying and discharging hydraulic pressure to and from inside of the hydraulic operational chamber 18b. Blind movement of the piston 18c when hydraulic pressure in the hydraulic operational chamber 18b is discharged via the hydraulic port 18f, is restricted by the spring 18e.

As shown by Fig. 5, the hydraulic cylinder device 18 is addingly provided with a position adjusting device 20 for moving a return position of the piston 18c when hydraulic pressure in the hydraulic operational chamber 18b is discharged, in a direction of enlarging a volume of the hydraulic operational chamber 18b by following wear of the facing 12b. The position adjusting device 20 is provided with an enlarged inner diameter portion 18a1 proximate to an opening of the cylinder 18a and a belleville spring (ring-like spring plate) 20b contained in a ring-like space 20a between the inner diameter portion 18a1 and an outer periphery of the push rod 18d. As shown by Fig. 6, the belleville spring 20b is provided with 8 pieces of tongue-like portions 20b1 engaged movably to the inner diameter portion 18a1 movably in the right direction of Fig. 5 by exerting force in the axial direction -equal to or larger than a predetermined value and unmovably in the left direction of Fig. 5, at an outer peripheral edge thereof at equal intervals in the peripheral direction. A number of the tongue-like portions 20b1 can arbitrarily be set. Force for pushing the piston 18c in the right direction of Fig. 5 by hydraulic pressure of the hydraulic operational chamber 18b, is sufficient for moving the tongue-like portions 20b1 of the belleville spring 20b relative to the inner diameter portion 18a1 in the right direction of Fig. 5. The inner diameter of the belleville spring 20b is selected to a size for preventing the outer periphery of the push rod 18d from interfering with an inner periphery of the belleville spring 20b by a pivotal movement centering on a point where the push rod 18d is brought into contact with the piston 18d which is produced in accordance with reciprocal movement of the piston 18c. A flange portion (stopper portion) 18d1 having an outer diameter larger than the inner diameter of the belleville spring 20b is formed at the outer periphery of the push rod 18d and a snap ring (stopper portion) 20c is fixed thereto remote from the flange portion 18d1 by a predetermined interval in the axial direction of the hydraulic cylinder device 18. The snap ring 20c is fixed to the push rod 18d by fitting an inner peripheral edge portion thereof into a groove in a ring-like shape formed at the outer periphery of the push rod 18d, an outer diameter thereof is also made larger than the inner diameter of the belleville spring 20b and the inner peripheral edge portion of the belleville spring 20b is disposed between the flange portion 18d1 and the snap ring 20c in the axial direction of the hydraulic cylinder device 18. In a state of Fig. 5 in which maximum hydraulic pressure is supplied to the hydraulic operational chamber 18b to maximize the pinching force of the facing 12b, there is present an interval S between the inner peripheral edge of the belleville spring 20b and the snap ring 20c in correspondence with a predetermined stroke.

According to the vehicular friction clutch apparatus having the constitution, explained above, when hydraulic pressure is not supplied to the hydraulic operational chamber 18b of the hydraulic cylinder apparatus 18, force exerted on the pressure plate 13b by the straps 13c overcomes force of the spring 18e and sliding resistance of the bearing assembly 15, the fork member 17 and the piston 18c, the pressure plate 13b is moved in a direction of separating from the flywheel 11, the pressure plate 13b is separated from a face of the facing 12b on the side of the pressure plate and a face of the facing 12b on the side of the flywheel is separated from the flywheel 11 and accordingly, the force for pinching the facings 12b is nullified and the transmission torque is nullified. Movement of the pressure plate 13b, the bearing assembly 15, the fork member 17, the push rod 18d and the piston 18c in this case is finished by bringing the snap ring 20a fixed to the push rod 18d into contact with the inner peripheral edge of the belleville spring 20b to thereby restrict further movement.

When hydraulic pressure is supplied form the hydraulic pressure port 18f of the hydraulic cylinder device 18 to the hydraulic operational chamber 18b, driving force is produced at the piston 18c by the hydraulic pressure and driving force (output of the hydraulic cylinder device 18) is transmitted to the pressure plate 13b successively via the push rod 18d, the fork member 17, the bearing assembly 15 and the lever mechanism 13d to thereby push the pressure plate 13b to the side of the flywheel 11. When the force exerted to the pressure plate 13b based on the driving force of the piston 18c overcomes force exerted on the pressure plate 13b by the strap 13c, the pressure plate 13b is moved to the side of the flywheel. Therefore, by rise of the hydraulic pressure of the hydraulic operational chamber 18b, the pressure plate 13b is moved to the side of the flywheel and pinches the facing 12b between the pressure plate 13b and the flywheel 11 and torque in accordance with the pinching force of the facing is transmitted from the flywheel 11 to the input shaft of the transmission.

The force exerted on the pressure plate 13b by the strap 13c is much smaller than the force exerted on the pressure plate 13b by the operational hydraulic pressure of the hydraulic cylinder device 18 and accordingly, the pinching force of the facing is substantially proportional to the hydraulic pressure supplied to the hydraulic cylinder device 18 and therefore, magnitude of transmission torque can be controlled by hydraulic pressure supplied to the hydraulic cylinder device 18.

When the pinching force of the facing is produced by supplying the hydraulic pressure to the hydraulic cylinder device 18, bending force is exerted to the fork member 17 and the lever members 12h and accordingly, these members are bent and bending force is also exerted to the cover plate 13a supporting the fulcrum point member 13j to thereby bend the cover plate 13a and a portion of a stroke amount of the piston 18c becomes ineffective. However, a direction of force exerted to the cover plate 13a always stays constant and an amount of ineffective stroke caused by bending the cover plate 13a is smaller than that in the case in which the direction of the force exerted to the cover plate 13a is inverted. Further, these bendings are in series with cushion bending provided to the facing by the cushioning spring 12a.

A position of the piston 18c when maximum hydraulic pressure is supplied to the hydraulic operational chamber 18b to maximize the pinching force of the facing, is a position at which the flange portion 18d1 of the push rod 18d is brought into contact with the inner peripheral edge of the belleville spring 20b by a force of less than a predetermined value in the case in which the facing 12b is in a state of new one and is not worn.

Meanwhile, when the facing 12b is worn by switching the vehicular friction clutch apparatus repeatedly between a state of transmitting torque and a state of not transmitting torque, the position of the piston 18c when maximum hydraulic pressure is supplied to the hydraulic operational chamber 18b, is shifted in the right direction of Fig. 5 in comparison with a position thereof when the facing 12b is not worn by an amount in correspondence with a wear amount of the facing 12b. Accordingly, in this case, the flange portion 18d1 of the push rod 18d is brought into contact with the inner peripheral edge of the belleville spring 20b by a force having a predetermined value or more and the belleville spring 20b is moved in the right direction of Fig. 5 until the sliding movement of the piston 18c is stopped, in other words, by a positional shift amount of the piston 18c in correspondence with the wear amount of the facing 12b.

Further, positions of the pressure plate 13b, the bearing assembly 15, the fork member 17, the push rod 18d and the piston 18c in correspondence with respectives of a maximum value and a minimum value of the facing pinching amount, are adjusted in correspondence with the wear amount of the facing 12b. With respect to the piston 18c, the return position of the piston 18c when the hydraulic pressure of the hydraulic operational chamber 18b is discharged, is moved in a direction of enlarging a volume of the operational pressure chamber 18b by following wear of the facing 12b. Thereby, an amount of operating oil to be charged and discharged to and from the hydraulic operational chamber 18b of the hydraulic cylinder device 18 when the transmission torque of the vehicular friction clutch is switched between a maximum value and a minimum value, becomes constant.

When the hydraulic operational chamber 18b of the hydraulic cylinder device 18 is communicated with a reservoir (not illustrated) in order to switch the torque transmitting state to the state of interrupting torque transmission, the piston 18c is swiftly returned and accordingly, the pinching force of the facing 12b is swiftly reduced by the recovery operation of members produced with bending and the operation of the straps 13c.

Further, the hydraulic pressure of the hydraulic operational chamber 18b of the hydraulic cylinder device 18 may be controlled such that the hydraulic pressure is supplied by being reduced to desired hydraulic pressure by a hydraulic pressure source accumulating hydraulic pressure at a predetermined level to an accumulator by a hydraulic pump driven by the engine via an electromagnetic clutch or directly driven by a motor, and a pressure control valve for driving to supply the hydraulic pressure introduced from the accumulator by a linear solenoid, or pressurized operating oil from the accumulator is charged and discharged to and from the hydraulic operational chamber by a flow rate control valve driven by a linear solenoid and the flow rate control valve is controlled by detecting hydraulic pressure of the hydraulic operational chamber, or oil delivered from the hydraulic pump directly connected to the engine is charged and discharged to and from the hydraulic operational chamber by a flow rate control valve driven by a linear solenoid and the flow rate control valve is controlled by detecting hydraulic pressure of the hydraulic operational chamber.

Further, even when the hydraulic pressure of the hydraulic operational chamber 18b of the hydraulic cylinder device 18 is controlled by operating a clutch pedal by a driver, it is apparent that similar operation is achieved with the above-described constitution of the hydraulic cylinder device and the constitution can naturally be adopted in such a type of a vehicular friction clutch apparatus. Further, a description will be given later of a detailed constitution when the hydraulic pressure at inside of the hydraulic cylinder device is controlled by operating a clutch pedal by a driver and operation in accordance with the constitution.

Further, the belleville spring 20b in the position adjusting device 20 shown by Fig. 5 is engaged with the cylinder 18a movably in one direction of the axial direction of the hydraulic cylinder device 18 by being exerted with force in the axial direction having a predetermined value or more and unmovably to other direction by the tongue-like portions 20b1 and engaged with the push rod 18d to be capable of reciprocating in the axial direction of the hydraulic cylinder device 18 by a predetermined stroke amount. However, the tongue-like portions 20b1 may be formed at the inner peripheral edge of the belleville spring 20b and the belleville spring 20b may be engaged with the push rod 18d by the tongue-like portions 20b1 movably in one direction of the axial direction of the hydraulic cylinder device 18 by being applied with a force in the axial direction having a predetermined value or more and unmovably in other direction and such that the belleville spring 20b is engaged with the cylinder 18a to be capable of reciprocating in the axial direction of the hydraulic cylinder device 18 by a predetermined stroke amount.

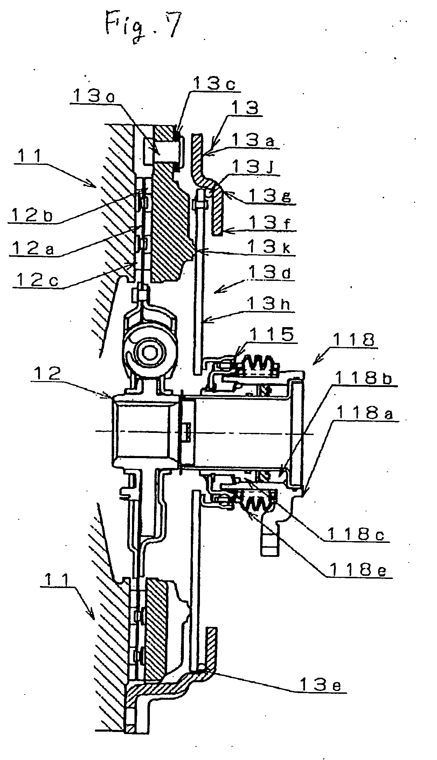

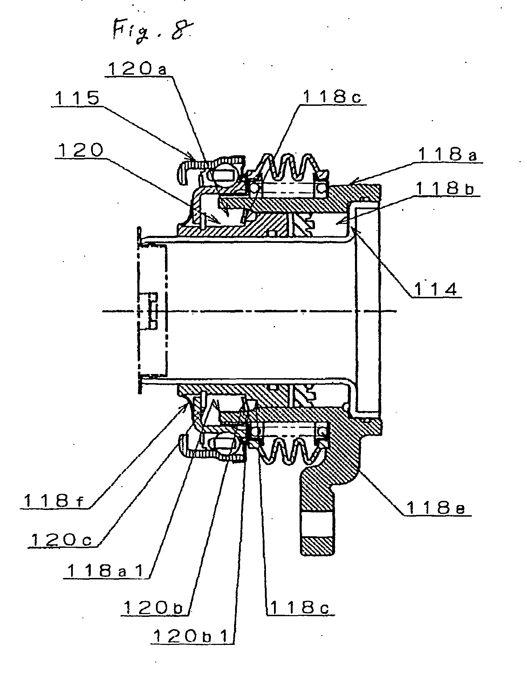

Fig. 7 and Fig. 8 show a vehicular friction clutch apparatus different from that shown by Fig. 1 through Fig. 6 although it is a vehicular friction clutch apparatus according to the invention. A point of difference between the vehicular friction clutch apparatus of Fig. 7 and Fig. 8 and the vehicular friction clutch apparatus of Fig. 1 through Fig. 6 resides in a constitution of moving a bearing assembly by a hydraulic cylinder device and a constitution of a position adjusting device. As shown by Fig. 7 and Fig. 8, a ring-like piston 118c is slidably fitted to inside of a cylinder 118a in a ring-like shape fixedly supported by a support sleeve 114 of a transmission case to thereby form to partition a hydraulic operational chamber 118b in a ring-like shape, a bearing assembly 115 is coupled to an end portion of the piston 118c having a smaller diameter projected from the cylinder 118a to move integrally therewith by a snap ring 120c and a spring plate 118f fixed to the piston 118c and a spring 118e for maintaining contact between the lever members 13h and the bearing assembly 115 and a spring 118e restricting blind movement of the piston 118c, is arranged on an outer peripheral side of the cylinder 118a. Further, a position adjusting device 120 is arranged with a belleville spring 120b at inside of a ring-like space 120a between an outer periphery of a root portion of the projected end portion of the piston 118b and an enlarged inner diameter portion proximate to an opening of the cylinder 118a and the belleville spring 120b is engaged with the cylinder 118a by a plurality of tongue-like portions 120b1 integrally formed to an outer peripheral edge thereof movably in one direction (left direction of Fig. 8) in the axial direction of the hydraulic cylinder device 118 by being applied with force in the axial direction having a predetermined value or more and unmovably in other direction (right direction of Fig. 8). An inner peripheral edge of the belleville spring 120a is arranged between a stepped portion (stopper portion) 118c1 formed at the piston 118c and the snap ring (stopper portion) 120c and in a state of Fig. 8 in which maximum hydraulic pressure is supplied to the hydraulic operational chamber 118b to maximize the pinching force of the facing 12b, there is present an interval (corresponding to the interval S shown by Fig. 5) in correspondence with a predetermined stroke between the inner peripheral edge of the belleville spring 120b and the snap ring 120c. Also according to the vehicular friction clutch apparatus of Fig. 7 and Fig. 8, there is achieved operation and effect similar to that in the vehicular friction clutch apparatus shown by Fig. 1 through Fig. 6.

Further, the tongue-like portions 120b1 may be formed at the inner peripheral edge of the belleville spring 120b, the belleville spring 120b may be engaged with the piston 118c by the tongue-like portions 120b1 movably in one direction of the axial direction of the hydraulic cylinder device 118 by being applied with force in the axial direction having a predetermined value or more and unmovably in other direction and such that the belleville spring 120b is engaged with the cylinder 118a to be capable of reciprocating in the axial direction of the hydraulic cylinder device 118 by a predetermined stroke amount.

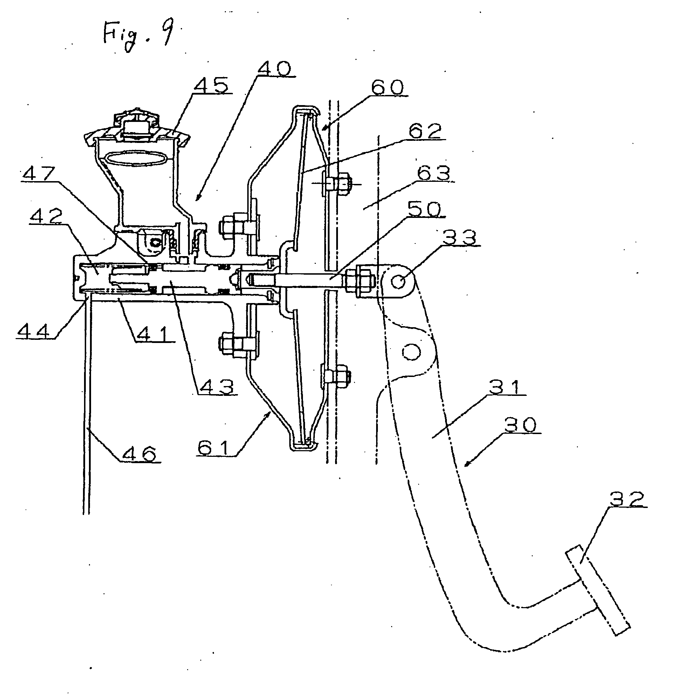

Fig. 9 is a view showing an operating system of the hydraulic cylinder device when a driver controls transmission torque of the vehicular friction clutch apparatus shown by Fig. 1 through Fig. 6.

Detailed constitutions of the clutch cover assembly, the bearing assembly and the hydraulic cylinder device are the same as those in the embodiment shown by Fig. 1 through Fig. 6 and accordingly, an explanation thereof will be omitted and an explanation will be given by using the same notations.

In Fig. 9, numeral 30 designates a clutch pedal exerted with operating force by the driver, numeral 60 designates an urging mechanism urging a rod 50 in a direction in which the hydraulic cylinder device 18 produces the pinching force of the facing 12b, numeral 40 designates a master cylinder connected to the clutch pedal 30 and outputting hydraulic pressure in accordance with a difference between urging force by the urging mechanism 60 and the operational force exerted to the clutch pedal 30 to the hydraulic cylinder device 18 and numeral 50 designates the rod for transmitting the operational force exerted to the clutch pedal 30 to the master cylinder 40.

The clutch pedal 30 is provided with a pedal lever 31 and a depressing portion 32 attached to a front end of the pedal lever 31 and is pivotable centering on a pivotal center 33 fixed to a vehicle. One end of the rod 50 is connected to a side of the pivotal center 33 of the pedal lever 31 and other end thereof is connected to an input side piston 43 of the master cylinder 40.

The master cylinder 40 is provided with a cylinder body 41 in a shape of a hollow cylinder, the input side piston 43 slidably fitted to inside of the cylinder body 41, formed to partition a pressure chamber 42 and connected to the rod 50, an output port 44 for outputting hydraulic pressure at inside of the pressure chamber 42 to the hydraulic operational chamber 18b of the hydraulic cylinder device 18 and a reservoir 45 capable of supplying oil to inside of the pressure chamber 42 by switching communication and interruption to and from the pressure chamber 42 in accordance with a position of the input side piston 43 relative to the cylinder body 41. A hydraulic hose 46 communicates inside of the pressure chamber 42 with inside of the hydraulic cylinder device 18.

The urging mechanism 60 fixes the cylinder body 41 by a cover 61. The urging mechanism 60 is provided with a diaphragm spring 62 an outer peripheral end of which is held by an inner peripheral face of the cover 61 and an inner peripheral end of which is held by the input side piston 43. Further, the cover 61 is fixed to a bracket 63 of the vehicle on a side thereof opposed to a side thereof of fixing the cylinder body 41.

Supply and discharge of hydraulic pressure between master cylinder 40 and the hydraulic cylinder device 18 is carried out via the hydraulic hose 46 connecting the output port 44 and the hydraulic port 18f, in supplying hydraulic pressure, hydraulic pressure at inside of the pressure chamber 42 is supplied to inside of the hydraulic operational chamber 18b via the output port 44, the hydraulic hose 46 and the hydraulic port 18f and in discharging hydraulic pressure, the input side piston 43 is moved in a direction of expanding a volume of the pressure chamber 42 in accordance with operation of the clutch pedal 30 and hydraulic pressure of the pressure chamber 42 is lowered and hydraulic pressure at inside of the hydraulic operational chamber 18b is discharged to inside of the pressure chamber 42 via the hydraulic port 18f, the hydraulic hose 46 and the output port 44.

An explanation will be given of supply and discharge of hydraulic pressure to and from inside of the hydraulic operational chamber 18b and operation of the clutch pedal 30 by the driver. In a state in which the driver does not exert depressing force (operating force) on the depressing portion 32, the input side piston 43 is urged in a direction of progressing into the pressure chamber 42 (left direction of Fig. 9) by elastic force of the diaphragm spring 62 and communication between the reservoir 45 and the pressure chamber 42 is interrupted by the input side piston 43 to thereby maintain inside of the pressure chamber 42 under high pressure. Hydraulic pressure at inside of the pressure chamber 42 is supplied from the output port 44 to the hydraulic port 18f via the hydraulic hose 46 to thereby maintain inside of the hydraulic operational chamber 18b under high pressure substantially the same as that in the pressure chamber 42. Thereby, the piston 18c urges the push rod 18d toward the outer end of the fork member 17. When the fork member 17 is urged, the bearing assembly 15 presses end portions of the lever members 13h, the pressure plates 13b are pressed to the side of the flywheel 11, the facings 12b are pinched between the pressure plates 13b and the flywheel 11, torque in accordance with the pinching force is transmitted from the flywheel 11 to the input shaft of the transmission and the friction clutch apparatus is engaged. Further, the elastic force of the diaphragm spring 62 is set such that in a state in which the depressing portion 32 is not exerted with depressing force, torque capable of being transmitted from the flywheel 11 to the transmission by the pinching force of the facings 12b becomes 100 % or higher.

According to the embodiment shown by Fig. 9, in a torque transmitting state, the pressure chamber 42 of the master cylinder 40 and the hydraulic operational chamber 18b of the hydraulic cylinder device 18 are maintained under high pressure and accordingly, a seal member 47 for sealing between the inner periphery of the cylinder body 41 and the input side cylinder 43 at inside of the pressure chamber 42 as well as the seal member 18g for sealing between the cylinder 18a and the piston 18c at inside of the hydraulic operational chamber 18b are always exposed under high pressure in a state in which the friction clutch apparatus is not operated. In such a state, there is a concern that the seal members 18g and 47 are stuck to inner peripheral faces of the cylinders and accordingly, in this embodiment, portions of the seal members 18g and 47 which are brought into contact with the inner peripheral faces of the cylinder 18a and the cylinder body 41, are coated by fluorine resin by which the seal members 18g and 47 are prevented from being stuck to the inner peripheral faces of the two cylinders.

Next, an explanation will be given of operation of the clutch pedal 30 when torque transmitted from the flywheel 11 to the transmission is reduced. When the driver exerts depressing force to the depressing portion 32 and the depressing force overcomes the elastic force of the diaphragm spring 62, the pedal lever 61 is pivoted centering on the pivotal center 33 and the input side piston 43 is moved at inside of the cylinder body 41 in a direction of increasing a volume of the pressure chamber 42 (right direction of Fig. 9). Thereby, pressure at inside of the pressure chamber 42 becomes low, pressure in the hydraulic operational chamber 18b becomes low via the hydraulic hose 46, then, the force of urging the fork member 17 by the push rod 18d is reduced and force of pressing the pressure plates 13b by the lever members 13h is reduced by which force of pinching the facings 12b between the pressure plate 13b and the flywheel 11 is reduced, the spring force of the strap 13c overcomes the pinching force, the pressure plates 13b and the facings 12b are separated from each other and the friction clutch apparatus is released. When the sliding movement amount of the input side piston 43 exceeds a predetermined amount, the pressure chamber 42 and the reservoir 45 are communicated with each other and oil can be supplied from the reservoir 45 to inside of the pressure chamber 42. In this case, as described in explaining the hydraulic cylinder device 18, when the return position of the piston 18c is moved by wear of the facings 12b in the direction of enlarging the volume of the hydraulic operational chamber 18b by following the wear of the facings 12b, the stroke of the push rod 18d in enlarging the volume of the hydraulic operational chamber 18b is restricted by the belleville spring 20b and the snap ring 20c and therefore, pressure at inside of the hydraulic operational chamber 18b becomes negative. At this occasion, oil having an amount following the wear amount of the facings 12b is supplied from the reservoir 45 to inside of the pressure chamber 42. When the driver has finished operating the clutch pedal 30 and the depressing force is not exerted to the depressing portion 32, by the elastic force of the diaphragm spring 62, the input side piston 43 is urged in a direction of progressing into the pressure chamber 42 (left side of Fig. 9), communication between the pressure chamber 42 and the reservoir 45 is interrupted, inside of the pressure chamber 42 is maintained under high pressure and torque is transmitted from the flywheel 11 to the transmission as mentioned above. When communication between the reservoir 45 and the pressure chamber 42 is interrupted, a total of respective volumes of the pressure chamber 42, the hydraulic hose 46 and the hydraulic operational chamber 18b becomes a value of a total of the volumes at a preceding time added with a volume of the oil supplied into the pressure chamber 42 by following the wear -amount of the facings 12b. In this way, oil is supplied from the reservoir 45 by following the wear amount of the facings 12b and accordingly, a position of the input side piston 43 relative to the cylinder body 41 when the clutch pedal 30 is not operated, is not changed by following the wear amount of the facings 12b. Accordingly, an inclination of the diaphragm spring 62 is not changed by following the wear amount of the facings 12b and accordingly, the stroke and load supplied to the depressing portion 32 in switching the torque transmitting state to the state in which the torque is not transmitted, is not changed over time and always stable load characteristic is constituted.

Therefore, when the load characteristic of the diaphragm spring 62 is set to a load characteristic of the cushioning springs 12a added with a very small amount of load in line with the load characteristic of the cushioning springs 12a, the depressing force of the clutch pedal 30 becomes a difference of forces of the diaphragm spring 62 and the cushioning springs 12a and therefore, the depressing force can significantly be reduced.

Further, according to the embodiment shown in Fig. 9, in a state in which the depressing force is not applied to the clutch pedal 30, by the urging force of the diaphragm spring 62, bending is operated from the master cylinder 40 even to the lever mechanism. In contrast thereto, according to the conventional system, the urging force is not operated in the state in which the depressing force is not exerted to the clutch pedal and accordingly, the pressure plate is operated by bending respective portions by exerting the depressing force to the clutch pedal. According to the constitution of the embodiment, not only an operational stroke required for bending the respective portions is dispensed with but also the bending operates in the reverse direction to help operate the clutch pedal. Therefore, when the pressure plates are made to stroke by the same amount, the depressing force exerted to the clutch pedal 30 is reduced by an amount of increasing the efficiency and the depressing force of the clutch pedal can significantly be reduced.

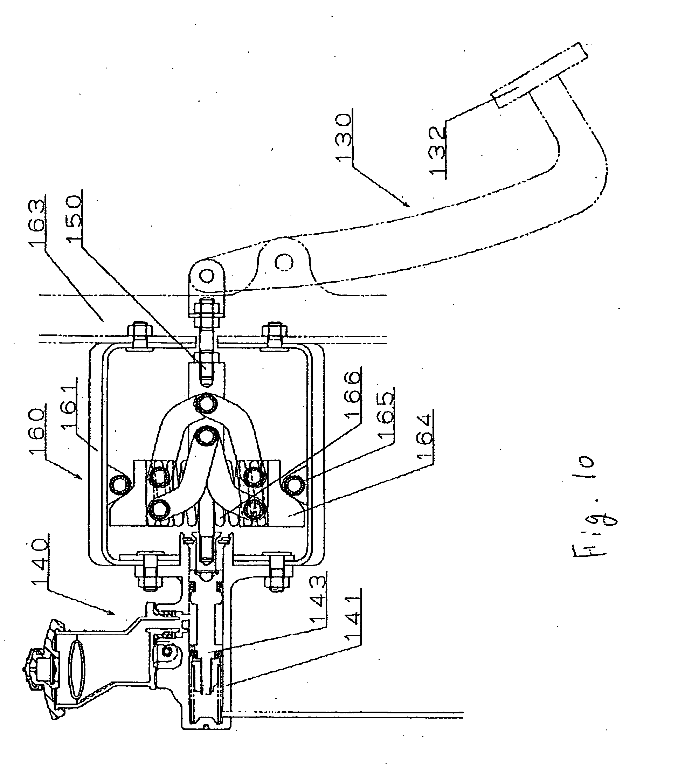

Fig. 10 is a view showing an operating system of the hydraulic cylinder device in the case in which the driver controls transmission torque of the vehicular friction clutch apparatus shown by Fig. 1 through Fig. 6 by an urging mechanism 160 having a constitution different from that in Fig. 9. Constitutions of a clutch pedal 130 and a master cylinder 140 other than the urging mechanism 160 are the same as those of the clutch pedal 30 and the master cylinder 40 explained in reference to Fig. 9 and accordingly, an explanation thereof will be omitted. Further, detailed constitutions of a clutch cover assembly, a bearing assembly and a hydraulic cylinder device are the same as those in the embodiment shown by Fig. 1 through Fig. 6 and accordingly, an explanation thereof will be omitted.

The urging mechanism 160 is provided with a tapered member 164 formed at a rod 150 connected to an input side piston 143 and provided with inclined faces thinned from a cylinder body 141 toward the clutch pedal 130, rollers 165 arranged to face the inclined faces of the tapered member 164 and a force accumulating member 166 exerting load toward the rollers 165 along the inclined faces of the tapered member 164. The rollers 165 are attached to a fixed portion 161 fixed to the cylinder body 141 and a bracket 163 of the vehicle and the force accumulating member 166 is brought into contact with the rollers 165 while providing load to the tapered member 164 to extend in a direction orthogonal to the rod 150. In a state in which the driver does not operate the clutch pedal 130, as shown by Fig. 10, the rollers 165 are disposed at a thinned portion of the tapered member 164.

When the driver exerts depressing force (operating force) to a depressing portion 132 of the clutch pedal 130 and the depressing force overcomes load by the force accumulating member 166, the rod 150 and the tapered member 164 are slidably moved in a direction of increasing a volume of a pressure chamber at inside of the master-cylinder 140 (right direction of Fig. 10). Operation of supply and discharge of hydraulic pressure from the master cylinder 140 to the hydraulic cylinder device 18b and vice versa are the same as the operation explained in reference to Fig. 9 and load and stroke exerted to the depressing portion 132 when the torque transmitting state is switched to the state of not transmitting torque are not changed over time to thereby constitute always stable load characteristic.

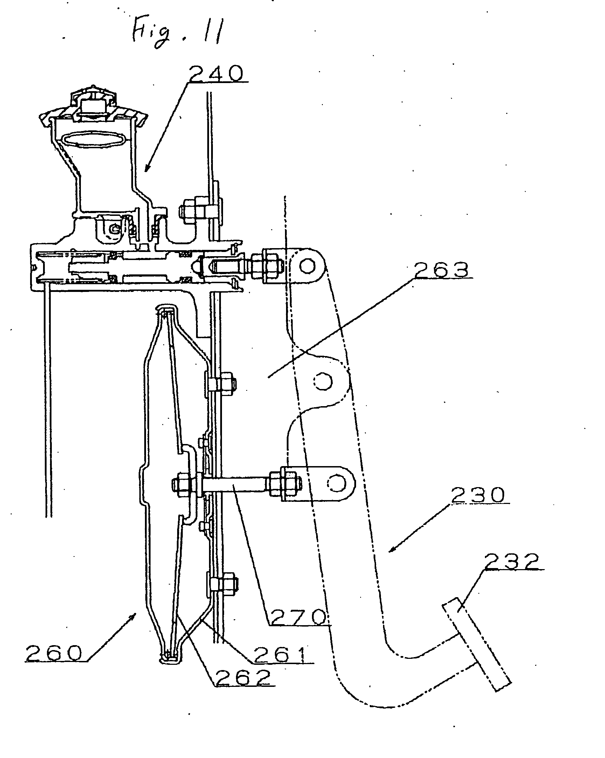

Fig. 11 is a view of an embodiment showing a case in which an urging mechanism is not arranged between the master cylinder and the clutch pedal as shown by Fig. 9 and Fig. 10 but arranged at a shaft 270 connected to a side of a depressing portion 232 from a pivotal center 233 of a clutch pedal 230 and other constitution and operation are the same as those explained in reference to Fig. 9 and accordingly, an explanation thereof will be omitted.

An urging mechanism 260 is constituted by a diaphragm spring 262 which is connected to the clutch pedal 230 and an inner periphery of which is brought into contact with a shaft reciprocating in the horizontal direction of the drawing in accordance with stroke of the clutch pedal 230 and a cover 261 supporting an outer periphery of the diaphragm spring 262 and axially connected to a bracket 263 of the vehicle. According to the constitution, a degree of freedom in respect of arrangement of constitution comprising a master cylinder 240, the urging mechanism 260 and the clutch pedal 230 is promoted and a dimension in the axial direction can be shortened. Further, it is apparent that attachment of the urging mechanism 260 shown by Fig. 11 can be used in the urging mechanism having the constitution shown by Fig. 10.

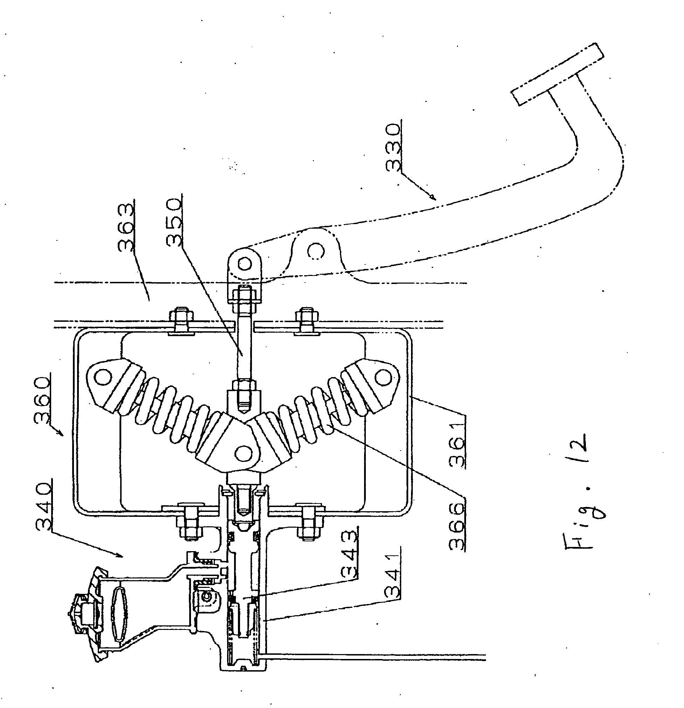

Fig. 12 is a view showing an operating system of a hydraulic cylinder device in the case in which a driver controls transmission torque of the vehicular friction clutch apparatus shown by Fig. 1 through Fig. 6 by an urging mechanism 360 having a constitution different from those in Fig. 9 and Fig. 10. Constitutions of a clutch pedal 330 and a master cylinder 340 other than the urging mechanism 360 are the same as those of the clutch pedal 30 and the master cylinder 40 explained in reference to Fig. 9 and accordingly, an explanation thereof will be omitted. Further, detailed constitutions of a clutch cover assembly, a bearing assembly and a hydraulic cylinder device are the same as those in the embodiment shown by Fig. 1 through Fig. 6 and accordingly, an explanation thereof will be omitted.

The urging mechanism 360 is provided with a fixed portion 361 fixed to a cylinder body 341 and a bracket 363 of the vehicle and a force accumulating member 366 one end of which is connected to the fixed portion 361, other end of which is connected to a rod 350 connected to an input side piston 343 and which is provided with accumulating force in an extending direction. In a state in which the driver does not operate the clutch pedal 330, as shown by Fig. 12, one end side of the force accumulating member 366 is disposed on a side of the clutch pedal 330 and other end side of the force accumulating member 366 is disposed on a side of the master cylinder 340 and the positional relationship is designed not to change even when stroke of the clutch pedal 330 is maximized.

When the driver exerts depressing force (operating force) to the clutch pedal 330 and the depressing force overcomes load by the force accumulating member 366, the rod 350 is slidably moved in a direction of increasing a volume of a pressure chamber at inside of the master cylinder 340 (right direction of Fig. 12). Operation of supply and discharge of oil pressure from the master cylinder 340 to the hydraulic cylinder device 18b and vice versa is the same as the operation explained in reference to Fig. 9 and in switching the torque transmitting state to the state of not transmitting torque, load and stroke exerted to the clutch pedal 330 is not changed over time to thereby constitute always stable load characteristic.

Although an explanation has been given of the embodiments of the invention, the invention is not limited to the above-described embodiments but may be any apparatus so far as the apparatus is a vehicular friction clutch apparatus having a mode in line with the gist of the invention.

As has been explained, according to the vehicular friction clutch apparatus of the invention, the pinching force is produced in the facings by the hydraulic cylinder device attached to the transmission case and the apparatus is excellent in view of mountability to an ordinary vehicle, can provide simply and stably the correlation between the pinching force of the facings and hydraulic pressure of the release cylinder apparatus and is provided with excellent stroke efficiency.

Further, the vehicular friction clutch apparatus according to the invention is installed with the position adjusting device for moving the return position of the movable member when the hydraulic pressure of the hydraulic operational chamber formed by the fixed member and the movable member of the hydraulic cylinder device is discharged in the direction of enlarging the volume of the hydraulic operational chamber by following wear of the facings and accordingly, an amount of pressurized oil to be charged and discharged to and from the hydraulic cylinder device to make variable the transmission torque is not influenced by wear of the facings and stays constant.

Further, when the vehicular friction clutch apparatus according to the invention is used in a vehicle of a style in which a driver operates a clutch pedal, the depressing force of the clutch pedal can significantly be reduced.

To provide a vehicular friction clutch apparatus excellent in view of mountability to an ordinary vehicle, capable of simply and stably providing correlation between pinching force of facings and hydraulic pressure of a release cylinder device and having excellent stroke efficiency, there is provided a vehicular friction clutch apparatus for carrying out torque transmission between an engine and a transmission by pinching facings 12b of a clutch disk 12 by a flywheel 11 and pressure plates 13b integrally rotated with the flywheel 11 and capable of progressing and regressing to and from the flywheel 11 in which the pinching force of the facings is produced by pressing the pressure plates 13b to the flywheel by a hydraulic cylinder device 18. Preferably, there is provided a position adjusting device 20 for moving return position of a piston 18c when hydraulic pressure of a hydraulic operational chamber 18b formed by a cylinder 18a and the piston 18c of the hydraulic cylinder device 18 is discharged in a direction of enlarging a volume of the hydraulic operational chamber 18b by following wear of the facings.

## Claims

1. A vehicular friction clutch apparatus for carrying out torque transmission between an engine and a transmission by pinching a facing of a clutch disk integrally rotated with an input shaft of the transmission of a vehicle by a flywheel integrally rotated with an output shaft of the engine of the vehicle and a pressure plate integrally rotated with the flywheel and capable of progressing and regressing to and from the flywheel:
wherein a force for pinching the facing is produced by pressing the pressure plate to the flywheel by a hydraulic cylinder device supported by a member fixed to the vehicle via a lever mechanism integrally rotated with the pressure plate;
**characterized in that**
the hydraulic pressure is supplied to the hydraulic cylinder device by a master cylinder capable of carrying out the torque transmission substantially in proportion to hydraulic pressure at an inner portion, the master cylinder comprising a cylinder body, an input side piston slidably arranged at inside of the cylinder body, a pressure chamber formed by the input side piston and the cylinder body, a reservoir storing oil at inside thereof capable of switching communication and interruption to and from the pressure chamber in accordance with the position of the input side piston relative to the cylinder body and an output port for communicating inside of the pressurized chamber with inside of the hydraulic cylinder device;
that the input side piston is slidably moved at inside of the cylinder body in accordance with an operational stroke of a clutch pedal and hydraulic pressure at inside of the pressurized chamber is outputted to the hydraulic cylinder device to thereby control the force of pinching the facing; and
that under a state in which an operating force is not exerted on the clutch pedal, the hydraulic cylinder device produces a maximum pinching force of the facing, when the operational force is exerted on the clutch pedal, the input side piston is slidably moved in a direction of increasing a volume of the pressure chamber.

2. The vehicular friction clutch apparatus according to Claim 1, further comprising:
an urging mechanism for urging the input side piston in a direction in which the hydraulic cylinder device produces the pinching force of the facing by hydraulic pressure converted via the master cylinder in the state in which the operational force is not exerted on the clutch pedal.

3. The vehicular friction clutch apparatus according to Claim 2:
wherein the urging mechanism is provided with a region in which a force of urging the input side piston is reduced when a stroke amount of the clutch pedal is increased.

4. The vehicular friction clutch apparatus according to Claim 2:
wherein the urging mechanism is operationally arranged between the master cylinder and the clutch pedal.

5. The vehicular friction clutch apparatus according to Claim 4:
wherein the urging mechanism is a diaphragm spring.

6. The vehicular friction clutch apparatus according to Claim 5:
wherein the diaphragm spring is brought into contact with a rod an outer periphery of which is supported relative to the cylinder body and an inner periphery of which is connected to the input side piston.

7. The vehicular friction clutch apparatus according to Claim 4:
wherein the urging mechanism comprises:
a taped member formed at the rod connected to the input side piston and provided with inclined faces thinned from the master cylinder toward the clutch pedal;
rollers arranged to face the inclined faces of the tapered member; and
a force accumulating member for providing a load along the inclined faces of the tapered member toward the rollers.

8. The vehicular friction clutch apparatus according to Claim 4:
wherein the urging mechanism comprises:
a force accumulating member formed at a rod connected to the input side piston for applying the rod with a load exerted from the clutch pedal toward the master cylinder.

9. The vehicular friction clutch apparatus according to Claim 2: wherein the urging mechanism is arranged at a position separated from the master cylinder and operated by the clutch pedal.

10. The vehicular friction clutch apparatus according to Claim 9:
wherein the urging mechanism is a diaphragm spring.

11. The vehicular friction clutch apparatus according to Claim 10:
wherein an outer periphery of the diaphragm spring is supported relative to a bracket of the vehicle and an inner periphery thereof is brought into contact with a shaft connected to the clutch pedal.

12. The vehicular friction clutch apparatus according to Claim 9:
wherein the urging mechanism comprises:
a tapered member formed at the shaft connected to the clutch pedal to and provided with inclined faces thinned from the clutch pedal to the master cylinder or from the master cylinder to the clutch pedal;
rollers arranged to face the inclined faces of the tapered member; and
a force accumulating member for applying load along the inclined faces of the tapered member toward the rollers.

13. The vehicular friction clutch apparatus according to Claim 9:
wherein the urging mechanism further comprises:
a force accumulating member formed at a rod connected to the input side piston for applying the rod with a load exerted from the clutch pedal to the master cylinder or a load exerted from the master cylinder toward the clutch pedal.

14. The vehicular friction clutch apparatus according to Claim 1:
wherein the master cylinder further comprises:
a seal member brought into abrasive contact with the cylinder body between the cylinder body and the input side piston;
wherein at least either of abrasive portions of the seal member and the cylinder body is coated with fluorine resin.
